# FASCICULE DE BREVET EUROPEEN

(11) **EP 1 364 831 B1**
(45) Date de publication et mention de la délivrance du brevet: **04.09.2013**
(21) Numéro de dépôt: 02291378.4
(22) Date de dépôt: 04.06.2002
(51) Int. Cl.: B60P 3/22, B65D 90/08

(54) **Citerne renforcée**
Verstärkter Tankbehälter
Reinforced tank

(30) Priorité: 24.05.2002 FR 0206367
(43) Date de publication de la demande: 26.11.2003
(73) Titulaire: Etablissement MAGYAR (S.A.), 21004 Dijon (FR)
(72) Inventeur: Magyar, Georges, Etablissements Magyar S.A., 21004 Dijon Cedex (FR)
(74) Mandataire: Novagraaf Technologies

(56) Documents cités:
- DE-A- 3 026 116
- DE-C- 809 710
- GB-A- 1 125 076
- NL-A- 8 300 434

## Description

La présente invention concerne - le domaine des citernes semi-remorques routières ou les citernes de stockage de produits liquides ou pulvérulents utilisées horizontalement.

De telles citernes, en particulier les citernes semi-remorques, présentent habituellement un corps de citerne cylindrique assurant l'essentiel du volume utile. Ce corps de citerne est prolongé dans sa partie avant par une virole de moindre section, destinée à libérer l'emplacement de l'attelage assurant la liaison avec le véhicule tracteur. Une telle citerne est connue du document US 1 125 076.

Le raccordement du corps de la citerne avec la virole se fait par soudure de différents éléments de section variable. La liaison entre le corps de citerne et la virole tronconique assurant la liaison avec la virole cylindrique se traduit par une zone de fragilité qui peut engendrer des cassures à la soudure de jonction.

Le but de la présente invention est de remédier à cet inconvénient en proposant une citerne renforcée.

L'invention concerne à cet effet selon son acception la plus générale une citerne formée par un corps partiellement cylindrique, prolongé par une partie cylindrique de moindre section par l'intermédiaire d'un tronçon de liaison tronconique caractérisée en ce qu'elle comporte un anneau de renfort positionné à la jonction entre l'une au moins des parties cylindriques et la partie tronconique, ledit anneau présentant une surface intérieure usinée pour correspondre, sur la moitié de la largeur avec la forme de la surface extérieure de l'extrémité de la partie cylindrique et sur l'autre moitié de la largeur avec la forme de la surface extérieure de l'extrémité de la partie tronconique.

Selon l'invention, les parties cylindrique et tronconique sont emmanchées dans l'anneau sur plusieurs millimètres, et l'anneau est soudé sur les parties cylindrique et tronconique par un cordon de soudure intérieur.

Avantageusement ledit anneau présente une surface intérieure annulaire dans la partie supérieure et, dans sa partie inférieure, une section présentant une surface partiellement cylindrique et partiellement oblique.

Selon un mode de mise en oeuvre particulier, la largeur de l'anneau est comprise entre 50 et 150 millimètres et de préférence entre 70 et 100 millimètres.

Avantageusement l'anneau est soudé sur les viroles cylindrique et tronconique par des cordons de soudure extérieurs.

Selon une variante, que les axes des deux parties cylindriques sont coplanaires, dans un plan vertical.

Selon une autre variante, les axes des deux parties cylindriques sont parallèles.

La présente invention sera mieux comprise à la lecture de la description qui suit, se référant à un exemple de réalisation non limitatif exposé en relation avec les dessins annexés où :
- La figure 1 représente une vue de côté d'une citerne selon l'invention ;
- la figure 2 représente une vue de détail selon une coupe A ;
- la figure 3 représente une vue de détail selon une coupe B.

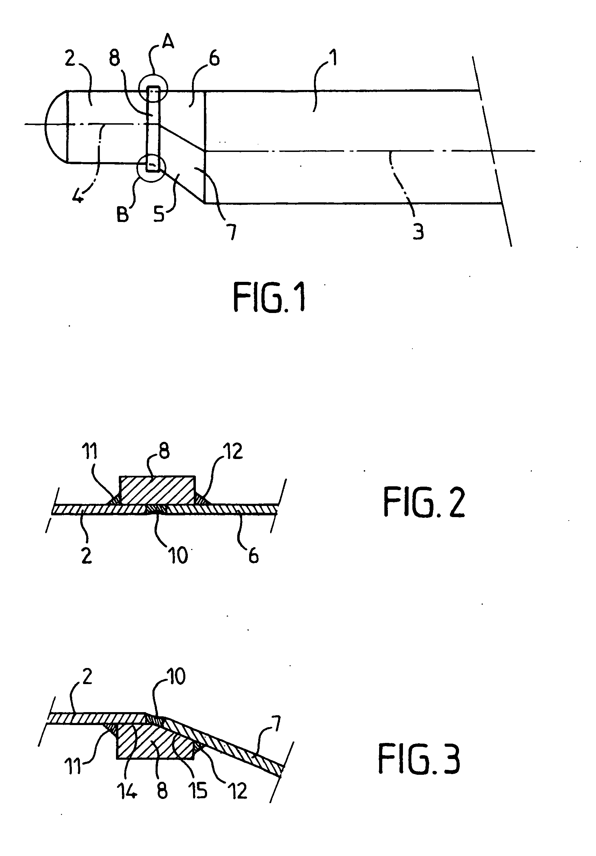

La figure 1 représente une vue de côté d'une citerne semi-remorque constituée par un corps de citerne cylindrique (1) présentant une section de 2,5 m environ. Ce corps de citerne est prolongé à sa partie avant par une partie cylindrique droite (2) de moindre section, de l'ordre de 1 m.

L'axe de symétrie (3) du corps de cylindre (1) est décalé par rapport à l'axe de symétrie (4) de la partie cylindrique (2). Dans l'exemple représenté en figure 1, l'axe de symétrie (3) du corps de cylindre (1) est parallèle à l'axe de symétrie (4) de la partie cylindrique (2), et les deux axes étant dans un plan vertical et l'axe de symétrie (4) de la partie cylindrique (2) étant décalé vers le haut par rapport à l'axe de symétrie (3) du corps de cylindre (1).

Cette disposition permet de libérer l'espace nécessaire à l'attelage de la remorque, en dessous de la partie cylindrique (2) de moindre section.

La liaison entre les deux parties cylindriques droites (1, 2) est réalisée par une pièce de liaison (5) de forme tronconique. Cette pièce de liaison (5) présente une base de section circulaire dans l'exemple décrit, présentant une section identique à celle du corps de citerne (1) et une base opposée de section identique à celle de la partie cylindrique (2).

Ces deux bases sont reliées par une enveloppe présentant une partie supérieure (6) semi-tubulaire, en forme de tuile, et une partie inférieure (7) semi-conique.

Le raccordement entre la base avant et la partie cylindrique (2) est renforcé par un anneau (8) extérieur, cerclant la zone de jonction. Cet anneau (8) présente une largeur de quelques centimètres et une épaisseur de quelques millimètres. Il est soudé par un cordon de soudure intérieur médian (10) sur l'ensemble de sa périphérie intérieur et par deux cordons de soudure extérieurs latéraux (11, 12), s'appuyant sur les champs latéraux de l'anneau (8) et sur la surface adjacente respectivement de la partie cylindrique (2) et de la virole tronconique (5).

L'anneau (8) présente comme représenté en figures 2 et 3 une surface interne non symétrique. Dans la partie supérieure, cette surface est tubulaire, et forme un demi-cylindre droit. La section dans cette moitié supérieure est rectangulaire, sur une partie formant un arc de 180°.

Dans la moitié inférieure, l'anneau présente une surface intérieure présente une section trapézoïdale. La moitié avant (14) est de forme cylindrique droite, la moitié arrière (15) présentant une forme tronconique complémentaire avec la zone de raccordement avec la virole (5).

L'anneau présente une surface intérieure complémentaire à la zone de raccordement à cheval sur la ligne de jonction entre la partie cylindrique droite (2) et la virole (5).

L'invention n'est pas limitée à des citernes à section circulaire, mais concerne aussi les citernes présentant une ou plusieurs parties de section elliptique ou autre.

Les axes du corps cylindrique (1) et de la partie cylindrique (2) ne sont pas nécessairement parallèles, mais peuvent former un angle tout en étant coplanaires, dans un plan vertical.

## Revendications

1. Citerne semi-remorque routière ou citerne de stockage de produits liquides ou pulvérulents utilisée horizontalement, formée par un corps partiellement cylindrique (1), prolongé par une partie cylindrique (2) de moindre section par l'intermédiaire d'un tronçon de liaison (5) tronconique, **caractérisée en ce qu'** elle comporte un anneau de renfort positionné à la jonction entre l'une au moins des parties cylindriques et la partie tronconique (5), ledit anneau présentant une surface intérieure usinée pour correspondre, sur la moitié de la largeur avec la forme de la surface extérieure de l'extrémité de la partie cylindrique et sur l'autre moitié de la largeur avec la forme de la surface extérieure de l'extrémité de la partie tronconique, les parties cylindrique et tronconique sont emmanchées dans l'anneau sur plusieurs millimètres, et l'anneau est soudé sur parties assemblées cylindrique et tronconique par un cordon de soudure intérieur.

2. Citerne selon la revendication 1, **caractérisée en ce que** ledit anneau présente une surface intérieure annulaire dans la partie supérieure et, dans sa partie inférieure, une section présentant une surface partiellement cylindrique et partiellement oblique.

3. Citerne selon la revendication 1, **caractérisée en ce que** la largeur de l'anneau est comprise entre 50 et 150 millimètres.

4. Citerne selon la revendication 1 ou 3, **caractérisée en ce que** l'anneau est soudé sur les parties assemblées cylindrique et tronconique par des cordons de soudure extérieurs.

5. Citerne selon l'une quelconque des revendications précédentes, **caractérisée en ce que** les axes des deux parties cylindriques sont coplanaires, dans un plan vertical.

6. Citerne selon l'une quelconque des revendications 1 à 5, **caractérisée en ce que** les axes des deux parties cylindriques sont parallèles.

## Patentansprüche

1. Tanksattelauflieger oder Lagertank von flüssigen oder pulverförmigen Produkten, der waagrecht verwendet wird, geformt von einem teilweise zylindrischen Körper (1), verlängert durch einen zylindrischen Teil (2) geringeren Querschnitts mittels eines kegelstumpfförmigen Verbindungsabschnitts (5), **dadurch gekennzeichnet, dass** er einen Verstärkungsring aufweist, der an der Verbindung zwischen mindestens einem der zylindrischen Teile und dem kegelstumpfförmigen Teil (5) positioniert ist, wobei der Ring eine bearbeitete Innenfläche hat, um über die Hälfte der Breite der Form der Außenfläche des Endes des zylindrischen Teils und über die andere Hälfte der Breite der Form der Außenfläche des Endes des kegelstumpfförmigen Teils zu entsprechen, der zylindrische und der kegelstumpfförmige Teil über mehrere Millimeter in den Ring eingeschoben sind, und der Ring auf die zusammengesetzten zylindrischen und kegelstumpfförmigen Teile durch eine innere Schweißnaht geschweißt wird.

2. Tank nach Anspruch 1, **dadurch gekennzeichnet, dass** der Ring eine ringförmige Innenfläche im oberen Bereich und in seinem unteren Bereich einen Querschnitt hat, der eine teilweise zylindrische und teilweise schräge Fläche hat.

3. Tank nach Anspruch 1, **dadurch gekennzeichnet, dass** die Breite des Rings zwischen 50 und 150 Millimeter liegt.

4. Tank nach Anspruch 1 oder 3, **dadurch gekennzeichnet, dass** der Ring durch äußere Schweißnähte auf die zusammengesetzten zylindrischen und kegelstumpfförmigen Teile geschweißt wird.

5. Tank nach einem der vorhergehenden Ansprüche, **dadurch gekennzeichnet, dass** die Achsen der zwei zylindrischen Teile in einer senkrechten Ebene koplanar sind.

6. Tank nach einem der Ansprüche 1 bis 5, **dadurch gekennzeichnet, dass** die Achsen der zwei zylindrischen Teile parallel sind.

## Claims

1. Tank for articulated lorry or storage tank for products in liquid or powder form, to be used in the horizontal position, formed of a partially cylindrical body (1) which is extended, via a frustoconical connecting segment (5), by a cylindrical portion (2) of smaller cross section, **characterized in that** it comprises a reinforcing ring located at the join between at least one of the cylindrical portions and the frustoconical portion (5), said ring having an inner surface machined so as to correspond, over half the width, to the shape of the outer surface of the end of the cylindrical portion and, over the other half of the width, to the shape of the outer surface of the end of the frustoconical portion, the cylindrical and frustoconical portions are pressed into the ring over several millimetres, and the ring is welded onto the assembled cylindrical and frustoconical portions by means of an internal welded seam.

2. Tank according to Claim 1, **characterized in that** said ring has an inner surface which is annular in the upper portion and, in its lower portion, a section having a surface which is partially cylindrical and partially oblique.

3. Tank according to Claim 1, **characterized in that** the ring is between 50 mm and 150 mm wide.

4. Tank according to Claim 1 or 3, **characterized in that** the ring is welded onto the assembled cylindrical and frustoconical portions by means of external welded seams.

5. Tank according to any one of the preceding claims, **characterized in that** the axes of the two cylindrical portions are coplanar in a vertical plane.

6. Tank according to any one of Claims 1 to 5, **characterized in that** the axes of the two cylindrical portions are parallel.
